# EUROPÄISCHE PATENTSCHRIFT

(11) **EP 1 090 819 B1**
(45) Veröffentlichungstag und Bekanntmachung des Hinweises auf die Patenterteilung: **10.07.2002**
(21) Anmeldenummer: 99119280.8
(22) Anmeldetag: 28.09.1999
(51) Int. Cl.: B60R 21/34, F15B 15/19, F15B 15/22

(54) **Hubkolben-Zylinder Einheit einer Sicherheitseinrichtung zum Schutz von Fussgängern**
Piston-cylinder unit of a safety arrangement for protecting pedestrians
Ensemble piston-cylindre d' un dispositif de sécurité pour la protection des piétons

(43) Veröffentlichungstag der Anmeldung: 11.04.2001
(73) Patentinhaber: Ford Global Technologies, Inc., A subsidiary of Ford Motor Company, Dearborn, Michigan 48126 (US)
(72) Erfinder: Veith, Bettina, 66424 Homburg (DE)
(74) Vertreter: Messulam, Alec Moses

(56) Entgegenhaltungen:
- DE-A- 2 841 315
- DE-A- 19 712 961
- US-A- 3 856 285
- US-A- 5 224 413
- PATENT ABSTRACTS OF JAPAN vol. 1998, no. 04, 31. März 1998 (1998-03-31) & JP 09 315266 A (MITSUBISHI MOTORS CORP), 9. Dezember 1997 (1997-12-09)

## Beschreibung

Die Erfindung bezieht sich auf eine Hubkolben-Zylinder Einheit einer im Bereich der Fronthaube eines Kraftfahrzeuges angeordneten Sicherheitseinrichtung zum Schutz von mit dem Fahrzeug zusammenprallenden Fußgängern, die durch eine geeignete Sensorvorrichtung zur Erfassung einer Kollision mit einem Fußgänger ausgelöst wird, die angetrieben wird durch ein energiespeichemdes Mittel wie pyrotechnischer Treibsatz oder unter Druck gespeichertes hydraulisches oder pneumatisches Arbeitsmittel, und die nach Auslösen die Fronthaube aus der Ruheposition in eine angehobene Aufprallposition verstellt, die Hubkolben-Zylinder Einheit einen Hubkolben mit Kolbenring, eine Kolbenstange und einen Zylinder mit Zylinderdeckel aufweist, wobei der Hubkolben mittels des Kolbenringes gegen den Zylinder abgedichtet wird, der Kolben mit der Kolbenstange starr verbunden ist und der Hubkolben im Zylinder und die Kolbenstange im Zylinderdeckel geführt werden.

Um bei einer Kollision eines Fußgängers mit einem Kraftfahrzeug die Verletzungsgefahr des Fußgängers beim Aufprall auf die Fronthaube wesentlich zu verringern, ist aus der JP-A-09315266 eine Sicherheltsvorrichtung gemäß dem Oberbegriff des Anspruch 1 bekannt, die den in Fahrtrichtung gesehen hinteren Bereich der Fronthaube im Falle einer Kollision anhebt. Hierdurch wird ein Abstand der Fronthaube zur steifen Unterstruktur des Fahrzeuges erreicht, so daß beim Aufprall des Fußgängers auf die Fronthaube ein größerer Deformationsweg zur Verfügung steht. Als wesentlicher Nachteil dieser Konstruktion ist die fehlende Steuerung der Hubkolbengeschwindigkeit während der Kraftenfaltung des Arbeitsmittels und während des Überganges von der Anhebephase in die Haltephase zu sehen. Es ist zwar eine Kraftbegrenzungsvorrichtung vorgesehen, damit die Fronthaube während des Fußgängeraufpralles nur eine bestimmte Kraft auf den Fußgänger ausübt, jedoch wirkt diese nur bei Rückbewegung des Hubkolbens, indem die vorgeschlagenen verklemmenden Mittel sich zwischen Hubkolben und Zylinder verkeilen.

Aus der US-A-5 224 413 ist eine Hubkolben-Zylinder Einheit bekannt, die am Hubkolben befestigte Dämpfungsringe aufweist. Die Dämpfungsringe dämpfen die Anschlagstöße des Hubkolbens auf die Zylinderböden bei Erreichen der Endpositionen. Dabei weisen die Dämpfungsringe eine abgestufte Dämpfungscharakteristik auf mittels einer ersten, axial vorstehende und einer zweiten, axial zurückgesetzten Dämpfungswulst. Allerdings wirkt ein Dämpfungsring erst beim Erreichen der Endposition, wenn die erste Dämpfungswulst den Zylinderboden berührt. Auf dem gesamten Verfahrweg des Hubkolbens zwischen den Zylinderböden ist eine veränderbare Dämpfungscharakteristik zwischen Hubkolben und Zylinder nicht möglich.

Aufgabe der Erfindung ist es daher, eine Hubkolben-Zylinder Einheit zu schaffen, die zur Minimierung der Verletzungen eines Fußgängers beim Aufprall auf eine sich aufstellende Fronthaube eine vorteilhafte Bewegungs- und Dämpfungscharakteristik des verfahrenden Hubkolbens beim Erreichen der Aufprallposition der Fronthaube aufweist, d. h. die Fronthaube ist so schnell wie möglich aufzustellen und gleichzeitig ist der harte Impuls beim Anschlag des Hubkolbens gegen die Endposition im Zylinder zu vermeiden.

Diese Aufgabe wird dadurch gelöst, daß im Zylinder ein elastischer und kompressibler Dämpfungsring auf der Kolbenstange zwischen Hubkolben und Zylinderdeckel angebracht ist, wobei der Dämpfungsring zum einen beim Aus- und Einfahren die Kolbenstange durch Reibung zwischen Kolbenstange und Zylinder bremst und zum anderen den Anschlag des Hubkolbens gegen den Zylinderdeckel puffert. Der Dämpfungsring kann im Ruhezustand am Hubkolben anliegen, am Zylinderdeckel oder beliebig dazwischen. Beim Ausfahren der Kolbenstange (4) ist der Dämpfungsring (10) frei verschiebbar auf der Kolbenstange (4) angeordnet. Dabei kann eine Rückhaltevorrichtung vorgesehen sein, die den Dämpfungsring beim Einfahren der Kolbenstange am Hubkolben festhält, wodurch die Größe der Reibkraft beim Einfahren erhöht wird gegenüber dem Fall, daß der Dämpfungsring beim Einfahren frei verschiebbar auf der Kolbenstange angeordnet ist.

Der Dämpfungsring soll dabei vorzugsweise aus einem Material bestehen, das elastisch und flexibel wie Gummi ist um die Reibungsfunktion zu erfüllen, gleichzeitig aber auch kompressibel, so daß der Dämpfungsring in der ausgefahrenen Endposition als Puffer zwischen Zylinderdeckel und Hubkolben wirkt. Ein Beispiel für ein geeignetes Material ist ein mikrozelliges PU-Elastomer. Besteht der Dämpfungsring aus einem nichtkompressiblen Material, kann er so ausgeführt sein werden, daß er aufgrund seiner konstruktiven Gestaltung die Pufferfunktion durch elastische Verformung übernimmt.

Als weiteres Merkmal ist auf der Kolbenstange ein zusätzlicher elastischer und kompressibler Dichtring ortsfest im Bereich des Zylinderdeckels angebracht. Damit wird ein kontrolliertes Entweichen der Luft aus dem Zylinderraum zwischen Hubkolben und Zylinderdeckel erreicht und der Dichtring bremst durch Reibung die Bewegung der Kolbenstange beim Aus- und Einfahren des Hubkolbens. Auch hier ist als Material vorzugsweise ein mikrozelliges PU-Elastomer vorgesehen, da mit der offenporigen Materialstruktur die Luftentweichung aus dem Zylinderraum gesteuert wird.

Aus der Kombination von Anordnung, Material und Abmessungen von Dämpfungsring und Dichtring sowie der Kraftentfaltung des energiespeichernden Mittels läßt sich die Verfahrcharakteristik des Hubkolbens und damit das zeitliche Verhalten beim Anheben der Fronthaube steuern. Die Wirkung des energiespeichernden Mittels besteht hauptsächlich darin, den Hubkolben nach Auslösen durch die Sensorvorrichtung möglichst schnell zu beschleunigen. Dagegen wird die notwendige Verzögerung bzw. die Dämpfung des Hubkolbens bei Erreichen der Aufprallposition der Motorhaube im wesentlichen durch Dämpfungsring und Dichtring bewirkt.

Als weiteres Merkmal der Hubkolben-Zylindereinheit ist das dem Hubkolben gegenüberliegende Ende der Kolbenstange als Schamierlager des Fronthaubenscharnieres ausgeführt. Durch die mehrfache, feste Lagerung der Kolbenstange mittels Dämpfungsring und Dichtring ist die Kolbenstange im Ruhezustand quasi starr angeordnet, d. h. aufgrund der üblichen Bedienungskräfte, wie sie beim Öffnen und Schließen einer Frontklappe auftreten, ist die Kolbenstange nicht zu bewegen. Wesentlicher Vorteil dieser Anordnung ist die Vereinfachung des Scharnieraufbaues: Durch die Verwendung der Kolbenstange selbst als Scharnierlager entfällt die untere Hälfte des Fronthaubenschamieres, welches sonst zur Befestigung der Fronthaube an der Karosserie des Vorderwagens benötigt würde, und es entfällt die notwendige Vorrichtung, die das Fronthaubenschamier bzw. die Fronthaube im Falle einer Fußgängerkollision von der Karosserie freigibt.

Die Erfindung wird nachstehend im einzelnen unter Bezugnahme auf die in den Figuren dargestellten Ausführungsbeispielen näher erläutert. Es zeigen:
**Fig. 1** einen Schnitt durch eine erfindungsgemäße Hubkolben-Zylinder-Einheit;
**Fig. 2** einen Schnitt durch ein Schamierlager auf der Kolbenstange;
**Fig. 3** einen prinzipiellen Zeit-Weg-Verlauf für den Hubkolben nach einer Fußgängerkollision;
**Fig. 4** eine Seitenansicht von Fronthaube und Hubkolben-Zylinder Einheit im Ruhezustand und in angehobener Aufprallposition, und von der Fronthaube in geöffnetem Zustand.

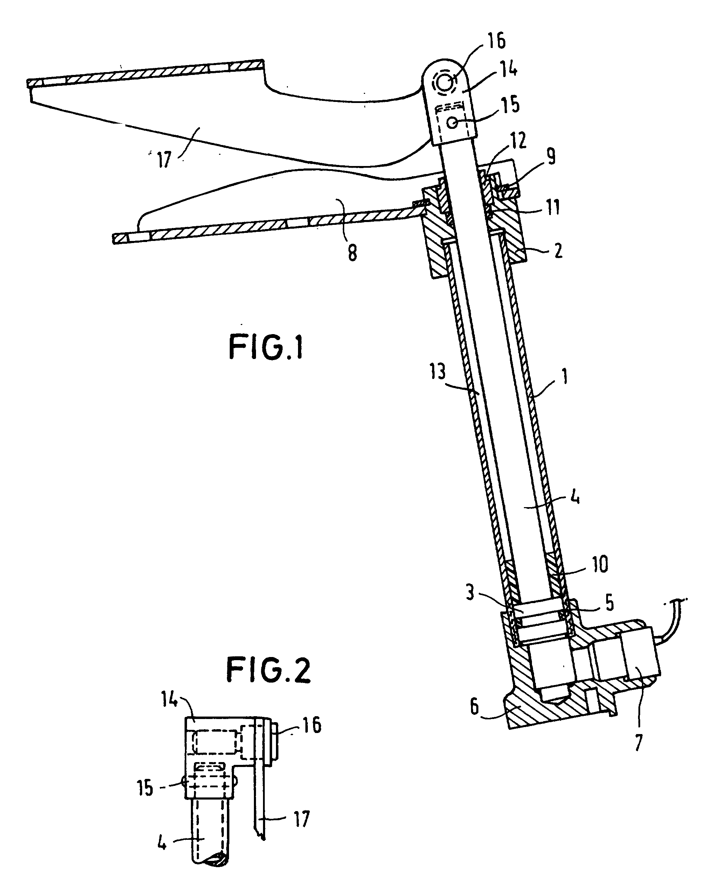

In **Fig. 1** ist eine erfindungsgemäße Hubkolben-Zylindereinheit im Schnitt dargestellt. Im Zylinder 1 und dem am oberen Ende angeordneten Zylinderdeckel 2 sind der Hubkolben 3 und die Kolbenstange 4 beweglich gelagert, wobei der Hubkolben 3 starr auf der Kolbenstange 4 befestigt ist und der Hubkolben 3 mit dem Kolbenring 5 gegen den Zylinder 1 luftdicht abschließt. Am unteren Ende des Zylinders ist eine Druckkammer 6 angebracht, die einen Gas-Generator 7 enthält. Im Falle eines Fußgängerkollision wird der Gas-Generator 7 durch eine hier nicht dargestellte Sensorvorrichtung ausgelöst und treibt den Hubkolben 3 an. Die Hubkolben-Zylinder Einheit ist am Zylinderdeckel 2 im Lagerblech 8 gelagert und mit dem Sicherungsring 9 befestigt, wobei das Lagerblech 8 wiederum an der Karosseriestruktur montiert wird. Damit kann die Hubkolben-Zylindereinheit beliebig im Vorderwagen eines Kraftfahrzeuges positioniert werden.

Im Zylinder 1 ist auf der Kolbenstange 4 der Dämpfungsring 10 angeordnet, der aus einem mikrozelligem PU-Elastomer besteht. Außen- und Innendurchmesser des Dämpfungsringes 10 sind als Passung so gewählt, daß der Dämpfungsring 10 auf Kolbenstange 4 und Zylinder 1 drückt und dadurch bei Bewegung der Kolbenstange 4 eine Reibkraft wirkt. Im Falle der Fußgängerkollision, wenn der Gas-Generator 7 ausgelöst wird, fährt die Kolbenstange 4 aus, wird aber gleichzeitig durch besagte Reibkraft gebremst. Erreicht der Hubkolben 3 die Endposition in voll ausgefahrenem Zustand, schiebt der Hubkolben 3 den Dämpfungsring 10 gegen den Zylinderdeckel 2. Da der Dämpfungsring 10 aus einem kompressiblen Material besteht, kann er zusammengedrückt werden und wirkt so als Endpuffer. Damit wird der Impuls, der sonst entstünde wenn der Hubkolben 3 direkt gegen den Zylinderdeckel 2 prallte, erheblich gemildert. Nach Erreichen der Aufprallposition wird die Kolbenstange 4 durch die Reibkraft in dieser ausgefahrenen Position gehalten, so daß für die aufgestellte Fronthaube keine weiteren Haltevorrichtungen benötigt werden. Beim Aufprall des Fußgängers auf die Haube wirkt der Dämpfungsring 10 als Kraftbegrenzer und erlaubt ein Einfahren der Kolbenstange 4, wenn die Kraft aus dem Aufprall einen bestimmten Betrag überschreitet.

Ein weiterer Dichtring 11 auf der Kolbenstange 4 ist im Zylinderdeckel 2 angeordnet und wird durch die Lagerschraube 12 gehalten. Auch hier wirkt eine Reibungsdämpfung auf die sich bewegende Kolbenstange 4 wie bei Dämpfungsring 10. Hauptsächlich jedoch steuert der Dichtring 11 die Luftentweichung aus dem Zylinderraum 13 wenn der Hubkolben 3 gegen den Zylinderdeckel 2 fährt. Damit wird ein definierter Gegendruck zum Druck des GasGenerators aufgebaut, der den Hubkolben 3 zusätzlich vor dem Einsetzen der Pufferwirkung des Dämpfungsringes 10 abbremst.

Auf der Kolbenstange 4 ist das Schamierlager 14 angebracht und mit dem Sicherungsstift 15 gesichert. Im Schamierlager 14 steckt der Schamierbolzen 16, der das obere Fronthaubenscharnier 17, welches direkt mit der Fronthaube verschraubt ist, drehbar lagert. Als Ergänzung ist in **Fig. 2** das Schamierlager von hinten gesehen gezeigt.

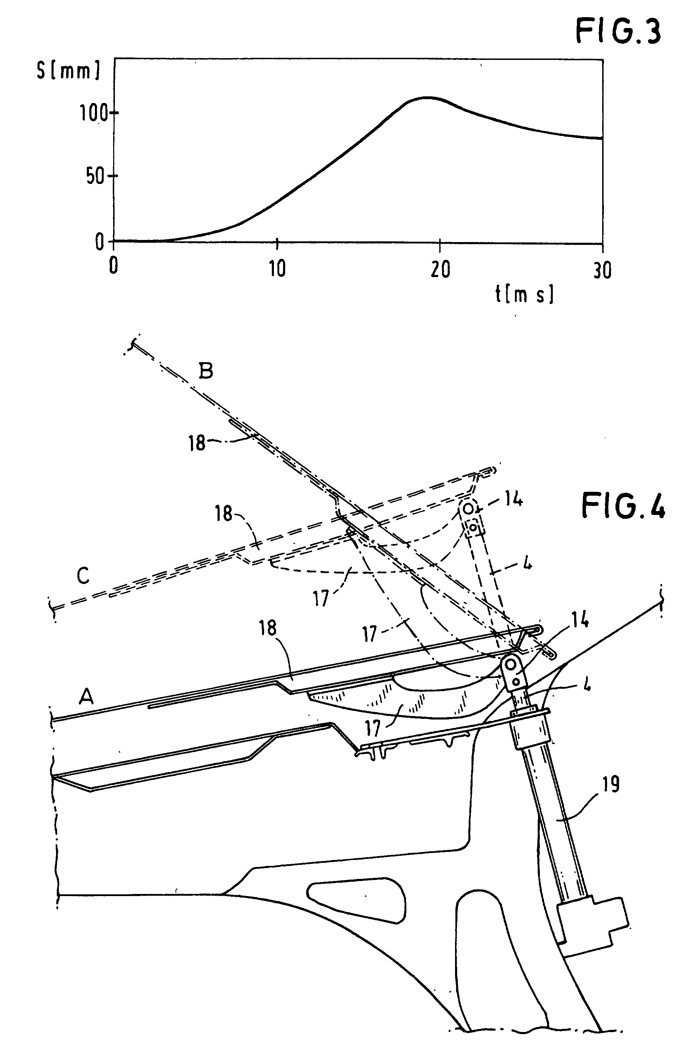

In **Fig. 3** ist der prinzipielle Zeit-Weg-Verlauf des Hubkolbens 3 nach einer Fußgängerkollision dargestellt, wie er durch die erfindungsgemäße Hubkolben-Zylinder Einheit erreicht wird. Auf der Längsachse ist die Zeit, auf der Hochachse der Verformungsweg aufgetragen. Zum Zeitpunkt 0 erfolgt das Auslösen des GasGenerators 7 und der Hubkolben 3 fängt an zu beschleunigen. Nach etwa 10 ms hat er die Endgeschwindigkeit erreicht und bewegt sich mit fast konstanter Geschwindigkeit auf die Endposition zu. Kurz vor Erreichen der Endposition setzt die Pufferwirkung des Luftpolsters im Zylinderraum 13 und des Dämpfungsringes 10 ein und bremst die Kolbenstange 4 auf Null ab. Diese federt daraufhin etwas zurück und bleibt in ausgefahrener Aufprallposition stehen. Dieser um die Endposition weiche Verlauf der Bewegung wirkt sich vorteilhaft auf die Reperaturkosten aus, da die Karosseriestruktur durch die geringen resultierenden Kräfte nicht beschädigt wird.

**Fig. 4** zeigt Fronthaube 18 und Hubkolben-Zylinder Einheit 19 im Einbauzustand. Die Hubkolben-Zylinder Einheit 19 ist am Vorderwagen am oberen Längsträger in Höhe des Windlaufes montiert und dient über das Schamierlager 14 als hinteres Drehlager für die Fronthaube 18. Position **A** zeigt die Fronthaube in geschlossener Stellung. Aus der Darstellung der geöffneten Position **B** der Fronthaube 18 ist ersichtlich, daß die Hubkolben-Zylinder Einheit 19 beim Öffnen der Fronthaube 18 die gleiche Funktion erfüllt wie ein normales Fronthaubenscharnier. Wenn bei einer Fußgängerkollision die Kolbenstange 3 in Position **C** ausfährt, wird die gesamte Fronthaube 18 am in Fahrtrichtung gesehenen Ende angehoben. Aufgrund der geometrischen Anordnung von Fronthaube 18 und Hubkolben-Zylinder Einheit 19 sind keine weitere Ausgleichsgelenke notwendig, da lediglich das Schamierlager 14 in die angehobene Aufprallposition verschoben wird.

## Patentansprüche

1. Hubkolben-Zylinder Einheit einer im Bereich der Fronthaube (18) eines Kraftfahrzeuges angeordneten Sicherheitseinrichtung zum Schutz von mit dem Fahrzeug zusammenprallenden Fußgängern, die durch eine geeignete Sensorvorrichtung zur Erfassung einer Kollision mit einem Fußgänger ausgelöst wird, die angetrieben wird durch ein energiespeicherndes Mittel wie pyrotechnischer Treibsatz (7) oder unter Druck gespeichertes hydraulisches oder pneumatisches Arbeitsmittel, und die nach Auslösen die Fronthaube aus der Ruheposition in eine angehobene Aufprallposition verstellt, die Hubkolben-Zylinder Einheit einen Hubkolben (3) mit Kolbenring (5), eine Kolbenstange (4) und einen Zylinder (1) mit Zylinderdeckel (2) aufweist, wobei der Hubkolben (3) mittels des Kolbenringes (5) gegen den Zylinder (1) abgedichtet wird, der Hubkolben (3) mit der Kolbenstange (4) starr verbunden ist und der Hubkolben (3) im Zylinder (1) und die Kolbenstange (4) im Zylinderdeckel (2) geführt werden
**dadurch gekennzeichnet, daß**
im Zylinder (1) ein elastischer und kompressibler Dämpfungsring (10) auf der Kolbenstange (4) zwischen Hubkolben (3) und Zylinderdeckel (2) angebracht ist, wobei der Dämpfungsring (10) zum einen beim Aus- und Einfahren die Kolbenstange (4) durch Reibung zwischen Kolbenstange (4) und Zylinder (1) bremst und zum anderen den Anschlag des Hubkolbens (3) gegen den Zylinderdeckel (2) puffert, wobei der Dämpfungsring (10) beim Ausfahren der Kolbenstange (4) frei verschiebbar auf der Kolbenstange (4) angeordnet ist.

2. Hubkolben-Zylinder Einheit nach Anspruch 1,
**dadurch gekennzeichnet, daß**
beim Einfahren der Kolbenstange (4) der Dämpfungsring (10) durch einen Rückhaltevorrichtung am Hubkolben (3) festgehalten wird.

3. Hubkolben-Zylinder Einheit nach Anspruch 1,
**dadurch gekennzeichnet, daß**
auf der Kolbenstange (4) ein zusätzlicher elastischer und kompressibler Dichtring (11) ortsfest im Bereich des Zylinderdeckels (2) angebracht ist, womit ein kontrolliertes Entweichen der Luft aus dem Zylinderraum (13) zwischen Hubkolben (3) und Zylinderdeckel (2) erreicht wird und der Dichtring (11) durch Reibung die Bewegung der Kolbenstange (4) beim Aus- und Einfahren des Hubkolbens (3) bremst.

4. Hubkolben-Zylinder Einheit nach Anspruch 1, 2 oder 3,
**dadurch gekennzeichnet, daß**
das dem Hubkolben (3) gegenüberliegende Ende der Kolbenstange (4) als Scharnierlager (14) des Fronthaubenscharnieres (17) ausgeführt ist.

## Claims

1. Piston-cylinder unit of a safety arrangement positioned in the area of the bonnet (18) of a motor vehicle for protecting pedestrians who collide with the vehicle, which is triggered by an appropriate sensor device for sensing a collision with a pedestrian, which is driven through an energy-storing means like pyrotechnical driving means (7) or hydraulic or pneumatic working medium stored under pressure, and which after triggering adjusts the bonnet from the position of rest into a raised impact position, the piston-cylinder unit has a (3) with piston ring (5), a piston rod (4) and a cylinder (1) with cylinder cover (2), wherein the piston (4) is sealed by means of the piston ring (5) against the cylinder, the piston (4) is rigidly connected with the piston rod (5) and the piston (4) is guided in the cylinder (1) and the piston rod (4) in the cylinder cover (2),
**characterised in that**
in the cylinder (1) an elastic and compressible damping ring (10) is attached on the piston rod (4) between piston (3) and cylinder cover (2), wherein the damping ring (4) on the one hand during withdrawal and insertion brakes the piston rod (4) through friction between piston rod (4) and cylinder (1) and on the other hand buffers the stop of the piston (3) against the cylinder cover (2), wherein the damping ring (10) upon withdrawal of the piston rod (4) is arranged in a freely displaceable way on the piston rod (4).

2. Piston-cylinder unit according to Claim 1
**characterised in that**
upon insertion of the piston rod (4) the damping ring (10) is held securely on the piston (3) through a retention device.

3. Piston-cylinder unit according to Claim 1
**characterised in that**
on the piston rod (4) an additional elastic and compressible sealing ring (11) is arranged in a fixed way in the area of the cylinder cover (2), through which controlled escape of air out of the cylinder area (13) between piston(3) and cylinder cover (2) is achieved and the sealing ring (11) through friction brakes the movement of the piston rod (4) during withdrawal and insertion of the piston (3).

4. Piston-cylinder unit according to Claim 1, 2 or 3
**characterised in that**
the end of the piston rod (4) lying opposite the piston (3) is designed as a hinge bearing (14) of the bonnet hinge (17).

## Revendications

1. Unité de piston et cylindre d'un dispositif de sécurité situé dans la zone du capot (18) d'un véhicule à moteur et destiné à protéger des piétons entrant en collision avec le véhicule, qui est déclenchée par un capteur approprié pour détecter une collision avec un piéton, qui est actionnée par un agent accumulant l'énergie tel qu'un bloc de poudre pyrotechnique (7) ou un fluide hydraulique ou pneumatique stocké sous pression, et qui après déclenchement déplace le capot de la position de repos dans une position relevée consécutive à l'impact, sachant que l'unité de piston et cylindre comprend un piston élévateur (3) avec un segment de piston (5), une tige de piston (4) et un cylindre (1) avec un couvercle de cylindre (2), sachant que le piston élévateur (3) est étanché par rapport au cylindre (1) par le biais du segment de piston (5), que le piston élévateur (3) est solidaire de la tige de piston (4) et que le piston élévateur (3) est guidé dans le cylindre (1) et la tige de piston (4), dans le couvercle de cylindre (2), **caractérisée en ce qu'**une bague d'amortissement (10) élastique et compressible est fixée dans le cylindre (1) entre le piston élévateur (3) et le couvercle de cylindre (2), sachant que la bague d'amortissement (10), d'une part, freine la tige de piston (4) qui rentre et qui sort du fait du frottement entre la tige de piston (4) et le cylindre (1) et, d'autre part, amortit la venue en butée du piston élévateur (3) contre le couvercle de cylindre (2), sachant que la bague d'amortissement (10) est placée sur la tige de piston (4) de manière à pouvoir coulisser librement lorsque la tige de piston (4) sort du cylindre.

2. Unité de piston et cylindre selon la revendication 1, **caractérisée en ce que**, lorsque la tige de piston (4) rentre dans le cylindre, la bague d'amortissement (10) est maintenue sur le piston élévateur (3) par un dispositif de retenue.

3. Unité de piston et cylindre selon la revendication 1, **caractérisée en ce qu'**une bague d'étanchéité élastique et compressible supplémentaire (11) est fixée à demeure sur la tige de piston (4), dans la zone du couvercle de cylindre (2), qui permet d'obtenir un échappement contrôlé de l'air de l'espace intérieur du cylindre (13) entre le piston élévateur (3) et le couvercle de cylindre (2), sachant que la bague d'étanchéité (11) freine par frottement le mouvement de la tige de piston (4) lorsque le piston élévateur (3) rentre et sort.

4. Unité de piston et cylindre selon la revendication 1, 2 ou 3, **caractérisée en ce que** l'extrémité de la tige de piston (4) qui est opposée au piston élévateur (3) est réalisée en tant que palier de charnière (14) de la charnière (17) du capot.
